# EUROPEAN PATENT APPLICATION

(11) **EP 2 105 822 A1**
(43) Date of publication of application: **30.09.2009**
(21) Application number: 08153552.8
(22) Date of filing: 28.03.2008
(51) Int. Cl.: G06F 1/32

(54) **Electronic device with switch off-function and method for providing a switch off-function for an electronic device**

(71) Applicant: Sony Corporation, Tokyo 108-0075 (JP)
(72) Inventor: Roth, Daniel, 70327, Stuttgart (DE)
(74) Representative: Körber, Martin Hans

(57) **Abstract**

The present invention relates to an electronic device (1) with switch off-function comprising a detection unit (2) for detecting activity of a user and a controller (5) for switching off the electronic device (1) in case that no user activity has been detected by the detection unit (2).

The present invention further relates to an electronic device (1) with switch-off function comprising a controller (5) for evaluating information related to a processed content and for switching the electronic device (1) off in case that depending on the evaluated information a change or end of the processed content is detected.

The present invention further relates to a method for providing a switch off-function for an electronic device (1).

## Description

The present invention relates to a switch off-function for an electronic device and to a method for providing a switch off-function for an electronic device. Specifically, the present invention relates to the field of automatically switching an electronic device off in case the user does not use it anymore.

Electronic devices are used in a wide field of applications. Such devices may for example be a personal computer, a television, a video recorder, a DVD recorder, facsimile devices, digital cameras, mobile terminals for wireless communication or other electronic consumer devices. An important task in developing electronic devices is to make the devices user-friendly and less power-consuming.

Specifically, in case the user stops to use an electronic device due to different reasons, e. g. if the user falls asleep, leaves the room or the like, the electronic device then continues to operate thereby consuming power even if there is no need by the user.

There have been developed several approaches for overcoming the problem of an unnecessary operation of an electronic device which is actually not used.

In the field of personal computers energy-saving modes are provided, e. g. the computer switches itself off or switches into a stand-by mode in case there is no action accomplished by the user. The problem with this approach is that in some cases the user is still needing the information displayed on the computer even though the user may not accomplish any action. On the other hand, if a program is running and the user forgets to end the program and then stops to use the computer, the computer will not switch off due to the still running program.

The disadvantage with this approach is that it is not adapted to the actual needs of the user and may cause a false switch off even when the user is still needing the computer or may cause an unnecessary power consumption.

A further approach is to provide a sleep timer within a device, which the user can activate in case he feels tired. After activating the sleep timer the device will then switch off after the time defined by the user, e. g. after 30, 60 or 90 minutes.

The disadvantage with this approach is that the user has to actively set the sleep timer in case he feels tired. If the user forgets this, then the device will continue operating.

A device which continues to operate even though the user fell asleep consumes unnecessary power and further disturbs the user, since the user does not sleep well due to the noise from the electronic device.

It is therefore the object of the present invention to overcome the above-mentioned problems.

This object is solved by an electronic device with switch off-function according to claim 1 and by a method for providing a switch off-function for an electronic device according to claim 13. The above-mentioned object is further solved by an electronic device with switch off-function according to claim 25 and by a method for providing a switch off-function according to claim 29.

According to a first aspect the present invention relates to an electronic device with switch off-function comprising a detection unit for detecting activity of a user and a controller for switching off the electronic device in case that no user activity has been detected by the detection unit.

According to the first aspect the present invention further relates to a method for providing a switch off-function for an electronic device comprising the steps of detecting activity of a user by a detection unit and switching off the electronic device in case that no user activity has been detected.

Preferably, the detection unit is connected to an input means enabling the user to input data and/or information and the detection unit depending on the information submitted by the input means is adapted to decide upon detection of user activity.

Additionally or alternatively, the detection unit is connected to a sensor for detecting motion and/or speech of a user and the detection unit depending on the information submitted by the sensor is adapted to decide upon detection of user activity.

Preferably, the detection unit is adapted to repeat the decision upon detection of user activity several times before the controller switches off the electronic device.

Hereby the detection unit can repeat the decision upon detection of user activity after predefined time intervals.

Alternatively, the controller switches the electronic device off after a predefined time interval and the switch off time is newly set upon detection of user activity by the detection unit.

Preferably, an output means is provided for outputting data and/or information to a user.

Advantageously, the controller is adapted to output via the output means a test message requesting a user activity.

Further advantageously, the controller is adapted to output via the output means an indication for indicating the upcoming switch off of the electronic device.

Hereby, the sensitivity of the detection unit can be changed after the output of an indication message.

Preferably, the detection unit is activated only at a predefined time and/or date.

In a preferred embodiment, the electronic device is a viewing device and the detection unit is activated after the end of the actual programme or after a change of content.

According to a second aspect the present invention relates to an electronic device with switch-off function comprising a controller for evaluating information related to a processed content and for switching the electronic device off in case that depending on the evaluated information a change or end of the processed content is detected.

According to the second aspect the present invention further relates to a method for providing a switch-off function for an electronic device comprising the steps of evaluating information related to a processed content and switching the electronic device off in case that depending on the evaluated information a change or end of the processed content is detected.

In a preferred embodiment further a reception unit is provided for receiving television broadcast, teletext data and an electronic programme guide EPG.

Preferably, the electronic device is a viewing device and the content is a television programme.

Advantageously, the controller is adapted to detect a change or end of the television programme by evaluating the received electronic programme guide EPG.

According to a further aspect the present invention relates to a network comprising an electronic device.

Advantageously, the network comprises at least one further device, wherein the controller of the electronic device is adapted to additionally switch off the at least one further device in case that no user activity has been detected.

The present invention will now be explained in more detail in the following description of preferred embodiments in relation to the enclosed drawings in which
- Figure 1: shows a schematic block diagram of an electronic device according to the present invention;
- Figure 2: is a flow chart showing the process steps of the method according to a first embodiment of the first aspect of the present invention;
- Figure 3: is a flow chart showing a detail of the process according to the first embodiment of the first aspect of the present invention;
- Figure 4: is a flow chart showing a detail of the process according to the first embodiment of the first aspect of the present invention;
- Figure 5: is a flow chart showing the process steps at the beginning of the method according to a second embodiment of the first aspect of the present invention,
- Figure 6: is a flow chart showing the process steps at an alternative beginning of the method according to a second embodiment of the first aspect of the present invention,
- Figure 7: is a flow chart showing a detail of the process according to the second embodiment of the first aspect of the present invention;
- Figure 8: is a flow chart showing a detail of the process according to the second embodiment of the first aspect of the present invention;
- Figure 9: is a flow chart showing a detail of the process according to the second embodiment of the first aspect of the present invention;
- Figure 9a: is a flow chart showing the steps of the switch-off process according to the second embodiment of the first aspect of the present invention;
- Figure 10: is a flow chart showing the process steps of the method according to a second aspect of the present invention; and
- Figures 11a and 11b: are different types of networks comprising an electronic device according to the present invention.

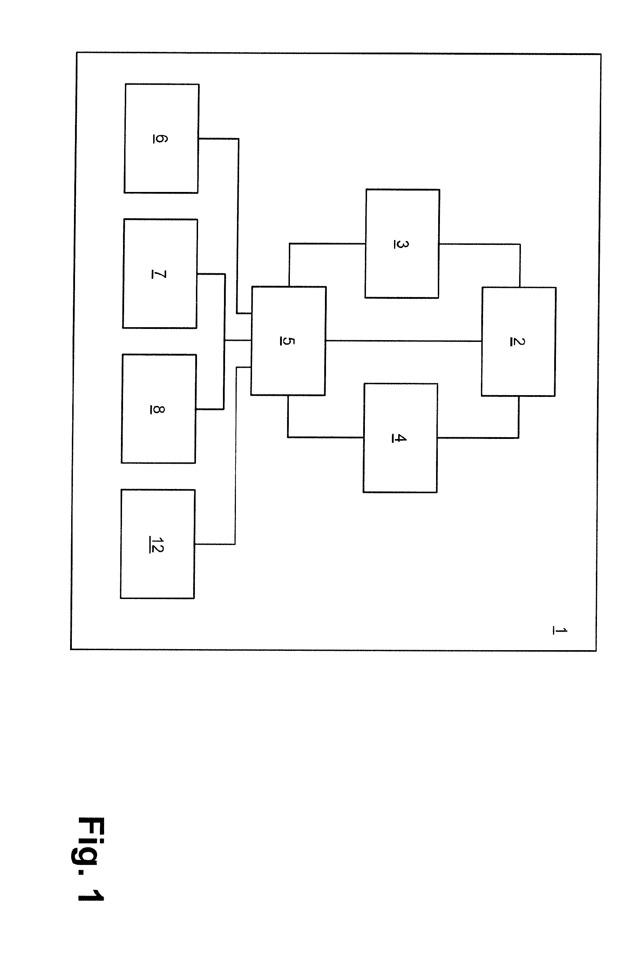

Figure 1 is a schematic block diagram showing the elements of an electronic device 1 according to the present invention. It is to be noted that the electronic device 1 in the following will be explained with relation to the first aspect of the present invention as well as to the second aspect of the present invention. Depending on the use of the electronic device 1 some components can be omitted or the may be implemented but not used.

The electronic device 1 comprises an input means 3 for enabling input of data and/or information by a user. The input means 3 may be a keyboard, a mouse, a touch pad, recognition of speech, an interface for receiving data input over a remote controller or any other interface enabling the user to input data and/or information or to select applications or programs. In case that the electronic device 1 is for example a television, a DVD player or any other electronic consumer device, then the input means 3 may be an IR sensor for receiving instructions from a remote controller operated by the user. The electronic device 1 further optionally can comprise a sensor 4 for detecting motion, speech, noise and the like produced by a user.

The input means 3 and the sensor 4 are connected to and in data communication with a detection unit 2 which depending on the data and/or information delivered by the input means 3 and/or the sensor 4 decides whether a user activity has been detected. A user activity hereby may comprise a motion, noise or the like detected by the sensor 4 or the input of data and/or information via the input means 3. The sensor 4 may additionally or alternatively comprise an infrared (IR) sensor for detecting the presence of a user within the room. For detecting user reaction any combination of the above said components of the input means 3 and/or the sensor can be provided.

Hereby, the sensitivity of the detection unit 2 can be changed depending on the situation. The detection unit 2 for example in a first mode detects user activity in case a very slight movement is submitted as recognised by the sensor 4. In a second mode with a decreased sensitivity the detection unit 2 will only regard large movements of the user as user activity and will ignore slight movements submitted by the sensor 4. That means, that the sensitivity level of the detection unit 2 can be increased or decreased.

The detection unit 2 and optionally the sensor 4 are implemented in an electronic device 1 according to a first aspect of the present invention and are used to detect user activity. In an electronic device 1 according to a second aspect of the present invention the detection unit 2 and/or the sensor 4 can also be omitted. Alternatively, in an electronic device 1 according to the second aspect of the present invention the detection unit 2 and/or the sensor 4 can be implemented but are not used. In a further alternative, where the electronic device 1 is adapted to work in different ways, the detection unit 2 and/or the sensor 4 are implemented and are used in case that the electronic device 1 works according to the first aspect of the present invention and are not used in case that the electronic device 1 works according to the second aspect of the present invention.

The electronic device 1 further comprises a controller 5 connected to the input means 3, the sensor 4 and the detection unit 2 and being in data communication with above-said components. The controller 5 hereby controls and supervises the transmission and processing of data and/or information within the electronic device 1. The controller 5 further supervises the operation of the electronic device 1.

In addition, the electronic device 1 further comprises an output means 6 for outputting data and/or information to a user. The output means 6 may be a display, a loudspeaker or any other graphical user interface adapted to output data and/or information to the user. A memory 8 is further provided for temporally or permanently storing data, information, programs, applications and the like. The memory 8 hereby may be divided into different memory spaces each providing different types of memory, e. g. a random access memory RAM, a flash memory or other types.

Optionally, a connection unit 7 within the electronic device 1 is provided which serves for connecting the electronic device 1 to at least one further device or to a network and enables the data communication of the electronic device 1 with the at least one further connected device. The connection unit 7 can hereby be any type of interface enabling a wired or wireless connection to the at least one further device.

Further, optionally, a reception unit 12 can be provided for wirelessly and/or via a cable receiving signals, such as for example television broadcast, teletext information, an electronic program guide (EPG) or the like. Further, the electronic device 1 may comprise means (not shown in the Figure) for reading a data medium, for example a CD, a DVD or the like, i.e. means for rendering a stored television programme or other content.

The above-said components, specifically the output means 6, the connection unit 7, the memory 8 and the reception unit 12 are all connected to and in data communication with the controller 5.

The above mentioned components can either be separate components or some of them or all can be implemented in the controller 5, so that the controller also carries out the functionalities of the implemented components. For example, the detection unit 2, the sensor 3 and/or the input means 4 can be implemented in the controller 5 or can be embedded in the controller 5.

The main idea according to a first aspect of the present invention is that the electronic device 1 via the detection unit 2 is able to detect activity of a user and in case that no activity of the user is detected the controller 5 can switch the electronic device 1 off. The term "switch off' or "standby" when used in the present invention generally refers to a reduced functionality of the electronic device 1. The above terms comprise several possibilities of reducing the functionality. For example, above terms comprise a complete switch off, i.e. a stop of the current entry. Another possibility is to provide as "switch off' or "standby" a mode, in which the electronic device 1 still is connected to the current but at present does not run. Further possibilities are to switch off only the display or the sound.

This main idea comprises two different embodiments. In a first embodiment the detection unit 2 repeats the decision upon user activity after predefined time intervals, i.e. the detection unit 2 waits predefined time intervals before checking upon user activity again. In a second embodiment the controller 5 sets a time-out after which the electronic device 1 is switched off. If before this time out the detection unit 2 detects a user activity, then the time-out is newly set.

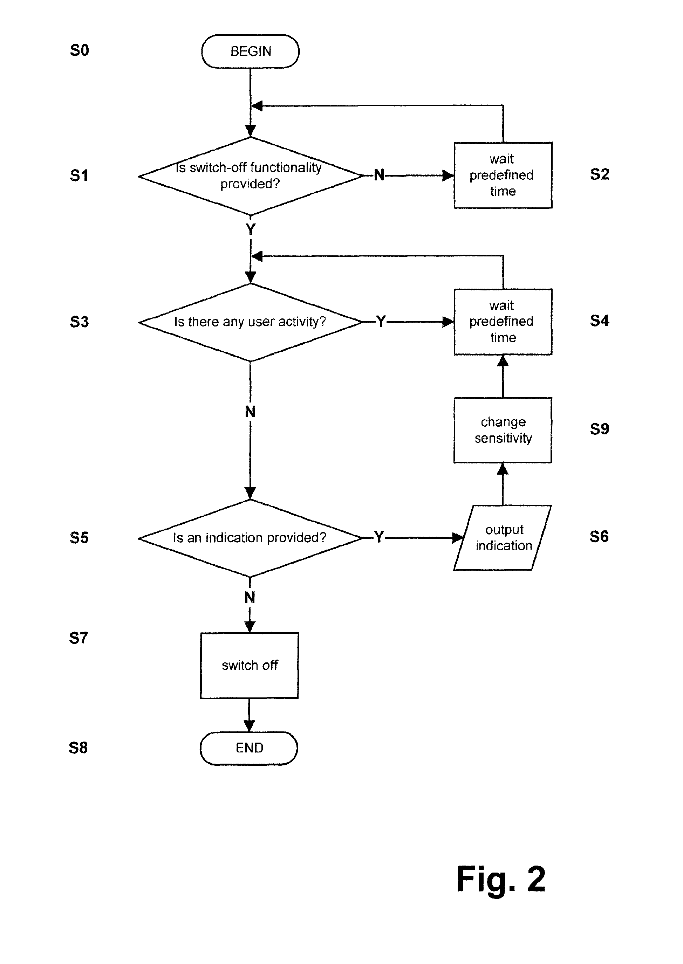

In the following the first embodiment according to the first aspect of the present invention will be explained with reference to Figure 2.

The process begins in step S0 for example with switching on the electronic device 1 or during a continuous process of the electronic device 1. In the next step S1 the electronic device will check whether a switch off-functionality actually is provided. It is for example possible to provide the switch off-functionality only at a specific time of the day, e. g. at night time or in the late evening or to provide the switch off-functionality only on specific days, e. g. on evenings before a working day. Another possibility would be to allow the user to manually enable or disable the switch off-functionality or to manually set the time and/or date when the switch off-functionality should be activated. Further, it may be possible for the user to disable the switch off-functionality at any time. The preset parameters will then be stored in the memory 8 so that the controller 5 can read out the parameters and determine whether actually the switch off-functionality is provided or not.

If actually no switch off-functionality is provided, then the process continues with step S2 where the electronic device waits a predefined time and then checks again in step S 1 whether the switch off-functionality now is provided. These predefined waiting times according to step S2 may also vary depending on the time of the day, i. e. during day times the waiting time can be longer and at night times the waiting time can be shorter.

Otherwise if in step S1 the controller detects that actually the switch off-functionality is provided, then in the next step S3 it will be decided whether there has been any user activity. Here fore the detection unit 2 checks whether it has received any information from the input means 3 or the sensor 4 indicating that there has been a user activity. If the detection unit 2 in step S3 detects that there has been a user activity, then the process continues with step S4 where the detection unit will wait for a predefined time until checking again in step S3 whether there is a user activity. As previously explained the predefined waiting time can be varied depending on the time of the day or depending on user settings within a setup menu or depending on a direct input by the user.

Otherwise if in step S3 the detection unit has decided that there has been no user activity, then the process continues with step S5 where the controller checks whether an indication is provided indicating the upcoming switch off of the electronic device 1. In case that no such indication is provided, then the controller in the next step S7 will switch off the electronic device 1.

Otherwise if in step S5 the controller 5 determines that an indication is provided, then the process continues with step S6 and the output means 6 will output an indication of the upcoming switch off of the electronic device 1. Such an indication may either be a message shown on the display, an appearing blinking symbol, for example a light emitting diode LED, an acoustic signal, muted sound or the like. Afterwards it is possible in step S9 to change the sensitivity of the detection unit 2, i.e. to change the functionality of the detection unit 2 in a way, that a more or less intense user activity is necessary for deciding that user activity has been detected. The process continues then with S4 where it is again waited for a predefined time. After the waiting time in step S3 it is checked again whether there has been any user activity and then the process continues as previously described.

In case there has been no user activity at all, then the process will end at sep S8 after switching off the electronic device 1 in step S7.

It is to be noted that the steps S1 and/or S5 where it is checked whether the switch off-functionality is provided or whether an indication is provided can also be omitted. That means that the electronic device 1 may provide in any case a detection of a user activity and in case no user activity has been detected automatically switches off the electronic device without any further indication.

The detection of user activity according to step S3 can hereby be accomplished in different ways as will be explained in the following. The input means 3 and/ or the sensor 4 hereby will detect reactions of the user and submit the result to the detection unit 2, which then in turn based on the submitted information as previously described will in step S3 decide, whether there has been a user activity or not.

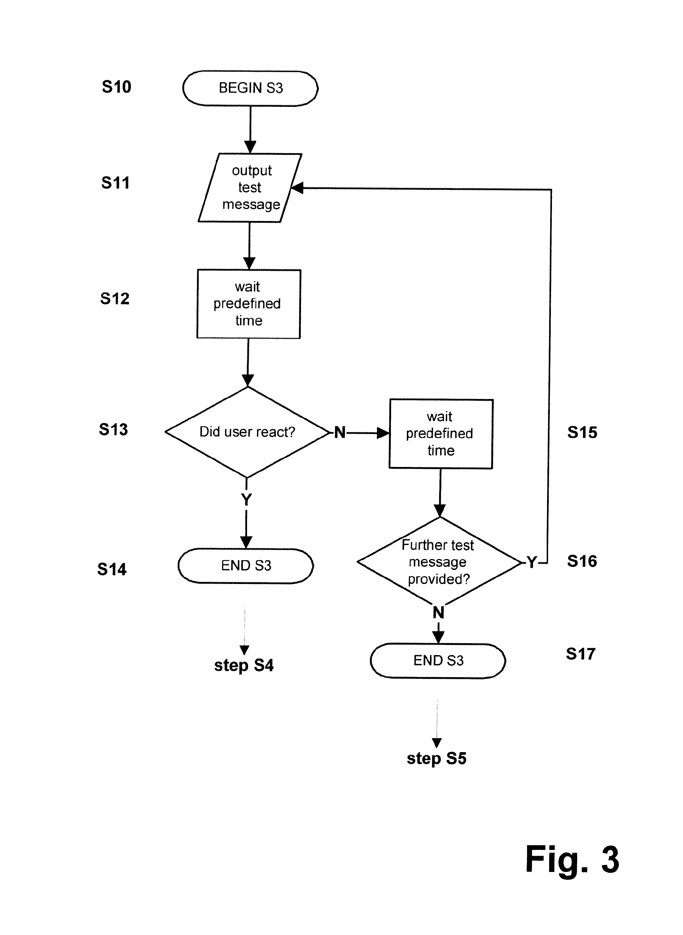

A first possibility for detecting the user activity as previously described in Figure 2 in step S3 will now be explained with reference to Figure 3. According to this first possibility, at least one test message will be output requesting any reaction of the user. In case that in response to one or more of such test messages no user reaction is determined by the input means 3, then the detection unit 2 will decide that there has been no user activity.

The detailed process of step S3 hereby begins in step S10. In the next step S11 a test message is output by the output means 6. This message may either be a text message, an acoustic signal, a blinking LED or the like indicating the user that an action is requested. After the output of the test message the electronic device 1 in step S12 will wait for a predefined time. This time can be fixed, manually changed by the user or may be dependent on the time of the day.

In the next step S 13 the detection unit 2 will check whether the user did react. This means the user can input via the input means 3 any data and/or information or the sensor 4 may have detected a motion, noise or the like from the user. If in step S13 it is determined that the user did react, then the process continues with step S 14, which is the end of step S3 and afterwards the process goes back to step S4 of Figure 2.

Otherwise if the detection unit 2 in step S 13 decides that the user did not react, then the process continues with step S 15 where it is waited for a predefined time until in step S16 the controller checks whether a further test message is provided. If the controller in step S16 determines that a further test message is provided, then the process continues with step S11 where a further test message requesting a reaction from the user is output. Hereby this first and second or further test messages may be different, e. g. indicating that it is already the second or further test message or the acoustic signal may get louder or the like. Alternatively the test message can also be a count down showing decreasing numbers starting for example from 20 and continuing with 19, 18 and so on until 0. Otherwise if in step S16 the controller determines that no further test message is provided, then the detection of user activity ends in step S 17 with the result of no detected user activity, which is the end of step S3 and the process then continues with step S5 in Figure 2.

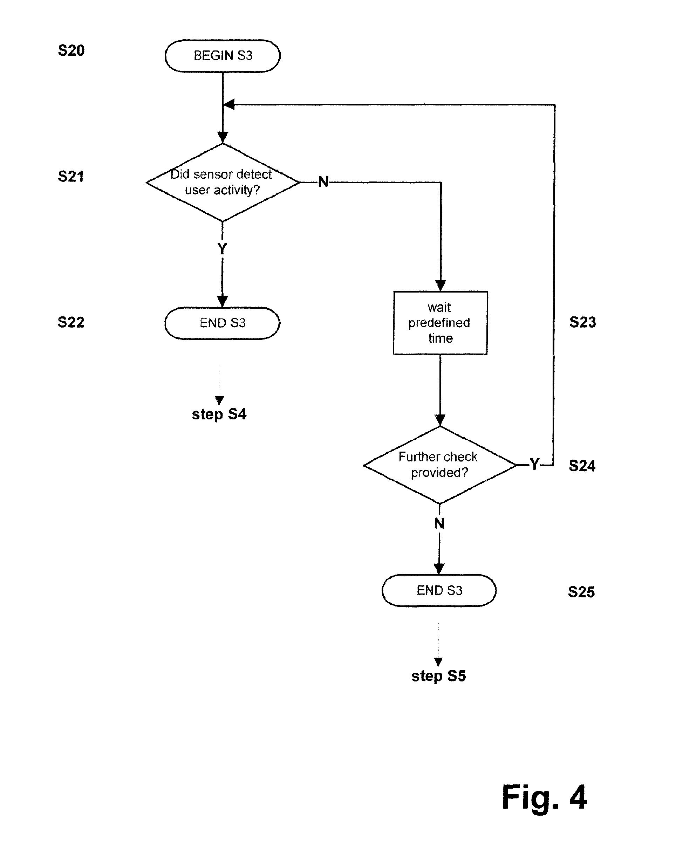

A further possibility of detecting user activity will be explained with reference to Figure 4. According to the second possibility, the sensor 4 will constantly or at predefined time intervals check whether there has been a user action. The process hereby begins in step S20. In the first step S21 the sensor 4 checks whether there has been any detected user action, e. g. motion, noise, speech or the like. The sensor 4 can also be an infrared sensor thereby allowing to determine whether a user is present in the room or not. In this case of an IR sensor the mere presence of a user is subsumed under the term "activity". In case the sensor in step S21 detects a user activity, then the process of step S3 ends in step S22 and goes back to step S4 in Figure 2.

Otherwise if in step S21 the sensor 4 does not detect any motion or the like from the user, then in step S23 the electronic device will again wait for a predefined time until in step S24 the controller 5 checks whether there is provided a further check of user activity. In case no further check is provided, then the process ends in step S25, which is the end of step S3 and the process continues with step S5 of Figure 2. Otherwise if the controller 5 in step S24 determines that a further check is provided, then the process will again go to step S21 where the sensor 4 is checked.

The electronic device according to the present invention does not necessarily comprise an input means 3 and a sensor 4. The electronic device may also only comprise an input means 3 or alternatively a sensor 4 submitting user activity to the detection unit 2.

A further possibility is to use a combination of output test messages and sensor detection. For example when detecting user activity the first try to detect user activity may be a test message requesting a reaction by the user. In case that once or several times no response is received after the message then the sensor 4 can be activated for sensing any user activity. Vice versa the process can also start with activation of the sensor 4 and in case the sensor 4 did not detect any activity then in further process steps messages can be output requesting a reaction by the user.

Further, several ways of triggering the detection unit 2 can be provided. As already discussed the detection unit 2 may be triggered only at a specific time and or date. A further possibility is to trigger the detection unit 2 in case the electronic device 1 is a viewing device, e.g. a television, a media PC, DVD combo or the like, after the end of the actual program, e. g. after the end of the actual broadcast television program such as a movie or after the end of the rendered programme. This could be done by evaluating data of the electronic programme guide EPG, Digital Service Information or Analogue Teletext. More generally, the detection unit 2 can be triggered after the change of content, i.e. after the actual processed programme, application, content or the like ends or changes. The electronic device 1 can also receive information on the actual program via internet signals, via internet teletext, via service information (SI) or the like and trigger the detection unit 2 accordingly.

Generally, two possibilities are provided how the time of triggering the detection unit 2 can be determined. In a first possibility the electronic device 1 checks in advance the data relating to the broadcast television program which have been received according to any of the previously explained alternatives, determines the time when the respective broadcast television program is supposed to end and sets a timer at the supposed ending time to trigger the detection unit 2. According to a second possibility, the electronic device 1 does not check the broadcast television program in advance, but as soon as the user starts to watch checks, whether the actual watched program changes or ends. If a change or end is detected, then the detection unit 2 is started. This second possibility has the advantage, that a shifting of television programs, e.g. due to live shows or the like, are also regarded since no specific timer is set.

In case of a DVD player or any other rendering device, the DVD player can detect whether the rendering of the movie is finished and the menu of the DVD is again processed. Alternatively, the TV can detect this by detecting whether a specific sequence is continuously repeated. If the DVD player comprises all means of an electronic device 1 according to the present invention, then the DVD player can trigger its detection unit 2. Otherwise, the DVD player can also send a signal to the respective electronic device 1 indicating that the rendered program has ended, so that the electronic device 1 upon reception of this signal can trigger the detection unit 2.

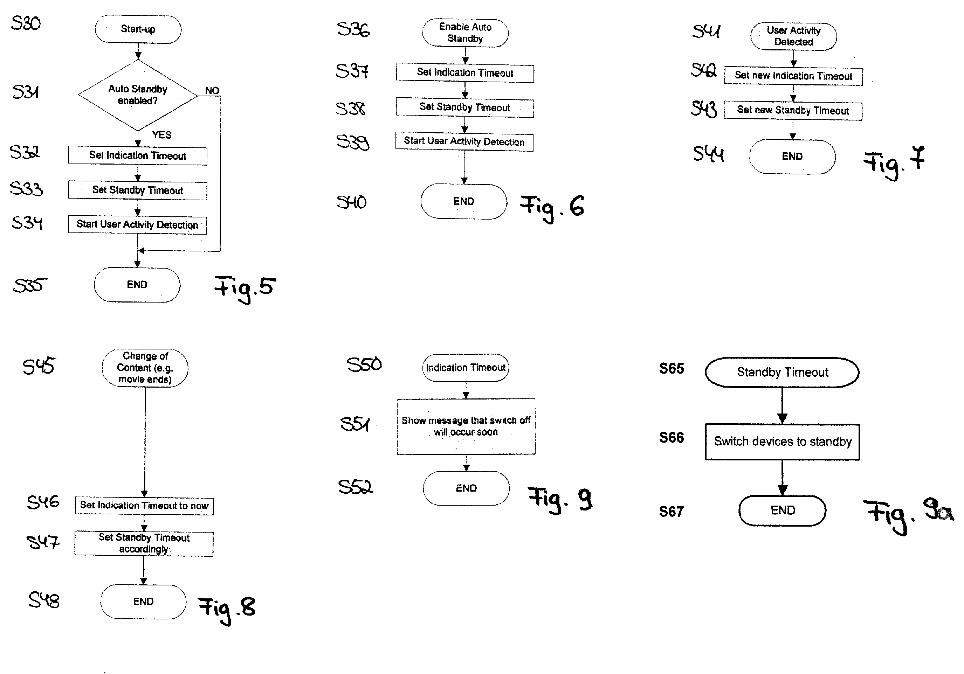

A second embodiment of the first aspect will now be explained with reference to Figures 5 to 9.

This second embodiment bases on the idea that specific timeouts are set. For example a timeout is set after a period of ten minutes. The controller 5 will then start the counting of these ten minutes and after the timeout has reached the controller will accomplish a specific action. In case that within this time period a predefined action happens, then the controller will newly set the timeout, i.e. the controller will start counting the ten minutes again.

In the Figures 5 to 9 the term "indication timeout" is intended to refer to a timeout after which the controller via the output means 6 will output a message indicating that a switch off is provided soon. With the term "standby timeout" the timeout is meant after which the electronic device 1 is switched off. Specifically the terms "standby" or "switch off' are meant to comprise different types or reduced functionality of the electronic device 1 as has been previously explained.

The second embodiment of the first aspect will now be explained. With reference to Figure 5 the beginning of the process is described, i.e. the setting of the different timers or timeouts is explained. The process starts in step S30 for example with switching on the electronic device 1 or during a continuous process of the electronic device 1. In the next step S31 a controller checks whether the auto-standby is enabled, i.e. whether the functionality of automatically switching the electronic device 1 off is enabled.

In case this functionality is enabled then in the next step S32 the controller will set an indication timeout, i.e. a time after which a message indicating a soon switch-off of the electronic device 1 will be provided. In the next step S33 the controller also sets a standby timeout, i.e. a time after which the electronic device 1 is automatically switched off. In the next step S34 the controller 5 will then activate the detection unit 2 and the detection unit 2 will start the detection of user activity.

Otherwise if in step S31 the controller 5 detects that no auto-standby function is presently enabled, then the controller 5 will not set any timeouts and not activate the detection unit and the process in any case ends with step S35.

In Figure 6 another possibility of beginning the process according the second embodiment is described. With reference to Figure 6 the process for manually enabling the auto-standby is shown, i.e. Figure 6 refers to the case that previously no auto-standby has been set. The process begins in step S36 for example with a command to enable the auto-standby, i.e. to enable the switch off-functionality. In the next step S37 the controller again as previously explained sets an indication timeout and in the following step S38 sets a standby timeout. Afterwards in step S39 the detection unit 2 is started and the detection of user activity begins. The process ends in step S40.

In Figure 7 the process is shown in case that the detection unit after being activated detects user activity. The process begins in step S41 with the detection of user activity by the detection unit 2. This detection of user activity results in a new setting of the timeouts, i.e. the periods until the timeouts will be newly begun. Therefore in the next step S42 the controller 5 sets a new indication timeout and in the next step S43 the controller sets a new standby timeout. The process ends in step S44.

In Figure 8 a further possibility of triggering a new setting of the timeouts is shown. The process begins in step S45 when for example a change of the content which is actually provided by the electronic device 1 happens. In case of a television for example this may be the ending of a movie or any other television program. If this happens then in the next step S46 the change of the content will trigger the controller to set the indication timeout to the present moment, i.e. the electronic device at once will output an indication message. In the next step S47 the controller 5 will set a new standby timeout and thereby will either also set the standby timeout to the present time or will shorten the standby timeout.

The process ends with step S48.

Figure 9 shows a detailed process of an indication timeout. The process begins in step S50 with a triggering of outputting an indication timeout. In the next step S51 the controller 5 via the output means 6 will output a message indicating that the switch off of the electronic device 1 will occur soon. The process ends in step S52.

Figure 9a shows the switch-off process. After the standby timeout is due in step S65, the electronic device 1 switches itself and optionally connected devices to standby in step S66. The process ends in step S67.

Even though the first embodiment and the second embodiment base on different ideas, it is clear that all details and different functionalities and possibilities explained with reference to the first embodiment can also be adopted by the second embodiment were appropriate and vice versa.

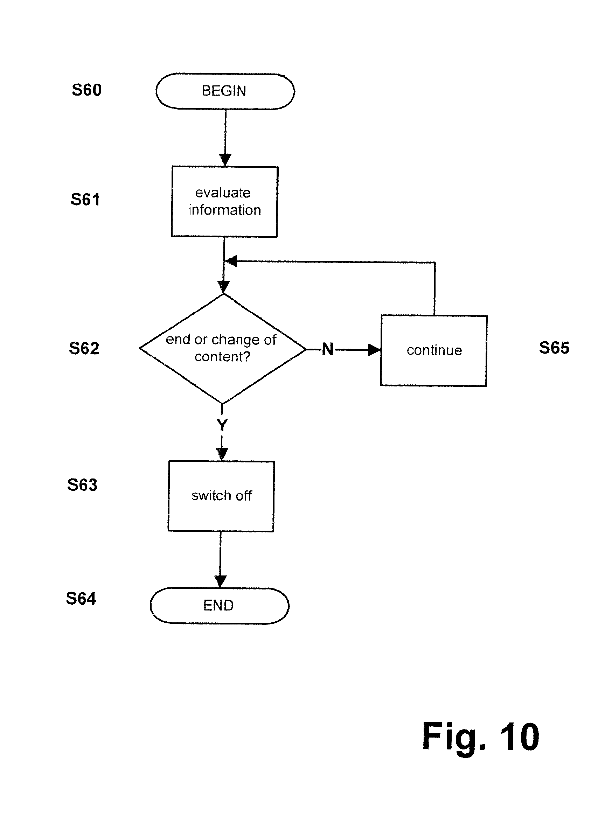

Now the second aspect of the present invention will be explained with reference to Figure 10. According to the main idea of the second aspect the controller 5 of the electronic device 1 is adapted to evaluate information related to a processed content and for switching the electronic device 1 off in case that depending on the evaluated information a change or end of the processed content is detected.

The electronic device 1 is adapted to process content in different ways. For example the means for rendering can be used to render content stored on a storing medium, such as a DVD, CD or the like. The rendered content can be a program, an application or a movie, a film or any other television program. Alternatively the term processing a content can refer to showing the content on a display, for example by showing television programs which are received via the reception unit 12. The term processing content may also comprise the possibility of receiving a signal from a further device, such as for example a DVD player, a video recorder, a CD player or the like.

The process starts in step S60 with processing of content and with triggering the controller 5 respectively. In step S61 the controller 5 of the electronic device 1 evaluates information related to the processed content in order to detect when the content changes or ends. The controller 5 can for example evaluate whether the application or program is still running or whether a movie or other television program is still displayed. The controller 5 hereby can either evaluate readily stored information such as the duration of the content or the controller 5 can evaluate other information which was received, downloaded or stored in the electronic device 1.

This could be done by evaluating data of the electronic programme guide EPG, Digital Service Information or Analogue Teletext. More generally, the switch off can be triggered after the change of content, i.e. after the actual processed programme, application, content or the like ends or changes. The electronic device 1 can also receive information on the actual program via internet signals, via internet teletext, via service information (SI) or the like and trigger the switch off accordingly.

Like already explained with reference to the first aspect, two possibilities are provided how the time of triggering the switch off can be determined. In a first possibility the electronic device 1 checks in advance the data relating to the broadcast television program which have been received according to any of the previously explained alternatives, determined the time when the respective broadcast television program is supposed to end and sets a timer at the supposed ending time to trigger the switch off. According to a second possibility, the electronic device 1 does not check the broadcast television program in advance, but as soon as the user starts to watch checks, whether the actual watched program changes or ends. If a change or end is detected, then the switch off is accomplished. This second possibility has the advantage, that a shifting of television programs, e.g. due to live shows or the like, are also regarded since no specific timer is set.

In case of a DVD player or any other rendering device, the DVD player can detect whether the rendering of the movie is finished and the menu of the DVD is again processed. Alternatively, the TV can detect this by detecting whether a specific sequence is continuously repeated. If the DVD player comprises all means of an electronic device 1 according to the present invention, then the DVD player can switch off.

In a preferred embodiment via the reception unit 12 a teletext information or an electronic program guide EPG has been received and stored in the memory 8. In the preferred embodiment the electronic device 1 is a viewing device adapted to show programs on a display. In case that the programs are television programs which are broadcast and received by the reception unit 12, the controller can evaluate the end or change of the television program by evaluating the stored EPG.

In step S62 the controller 5 checks, whether the processed content has ended or changed. In case the processed content ends or changes, the controller 5 in step S63 switches the electronic device 1 off. Otherwise, if no end or change of the processed content is detected, then the processing of the content continues in step S 65. The whole process ends in step S64.

As already described this allows a reduction of power consumption and the user is less disturbed. Additionally this second aspect can be advantageously provided in case that for example children are watching television and so it can be easily controlled that they are only watching the presently broadcast television program and will not continue watching television.

Even though the first aspect and the second aspect base on different ideas, it is clear that all details, different functionalities and possibilities explained with reference to the first aspect can also be adopted by the second aspect of the invention where appropriate and vice versa.

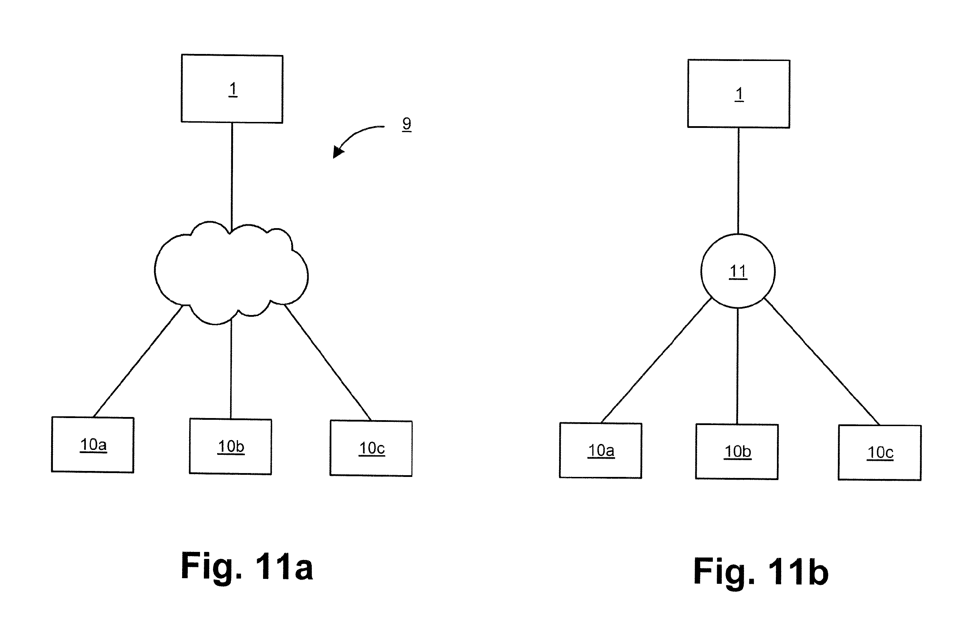

As shown in Figures 11a and 11b the electronic device 1 can be connected to at least one further device 10a, 10b, 10c. The connection as shown in Figure 11a may either be over a network 9 or via a switch box 11 as shown in Figure 11b. If several further devices 10a, 10b, 10c are connected to the electronic device and operating together with the electronic device 1 then the electronic device 1 may switch off also the further devices 10a, 10b and 10c in case that the user does not show any activity. The switching off of the further devices 10a, 10b and 10c can be accomplished by sending messages within the network 9. In case the network is a HDMI CEC system it is for example possible to send each device to standby with an individual directly addressed message or to broadcast a standby message in order to send all devices to standby. Alternatively as shown in Figure 11b the power of the further devices 10a, 10b, 10c can be switched off by the switch box 11. In a further embodiment the electronic device 1 can also send IR commands to the further devices. The further devices can thereby be switched into direct standby or system standby. The switch off-functionality within the network 9 or via the switch box 11 can be adopted in the first as well as in the second aspect of the present invention.

## Claims

1. Electronic device (1) with switch off-function comprising
a detection unit (2) for detecting activity of a user and
a controller (5) for switching off the electronic device (1) in case that no user activity has been detected by the detection unit (2).

2. Electronic device (1) according to claim 1,
wherein the detection unit (2) is connected to an input means (3) enabling the user to input data and/or information and
wherein the detection unit (2) depending on the information submitted by the input means (3) is adapted to decide upon the detection of user activity.

3. Electronic device (1) according to claim 1 or 2,
wherein the detection unit (2) is connected to a sensor (4) for detecting motion and/or speech of a user and
wherein the detection unit (2) depending on the information submitted by the sensor (4) is adapted to decide upon the detection of user activity.

4. Electronic device (1) according to any of claims 1 to 3,
wherein the detection unit (2) is adapted to repeat the decision upon detection of user activity several times before the controller (5) switches off the electronic device (1).

5. Electronic device (1) according to claim 4,
wherein the detection unit (2) repeats the decision upon detection of user activity after predefined time intervals.

6. Electronic device (1) according to any of claims 1 to 3,
wherein the controller (5) switches the electronic device (1) off after a predefined time interval and whereby upon detection of user activity by the detection unit (2) the switch off time is newly set.

7. Electronic device (1) according to any of claims 1 to 6,
wherein an output means (6) is provided for outputting data and/or information to a user.

8. Electronic device (1) according to claim 7,
wherein the controller (5) is adapted to output via the output means (6) a test message requesting a user activity.

9. Electronic device (1) according to claim 7 or 8,
wherein the controller (5) is adapted to output via the output means (6) an indication for indicating the upcoming switch off of the electronic device (1).

10. Electronic device (1) according to claim 9,
wherein the sensitivity of the detection unit (2) is changed after the output of an indication message.

11. Electronic device (1) according to any of claims 1 to 10,
wherein the detection unit (2) is activated only at a predefined time and/or date.

12. Electronic device (1) according to any of claims 1 to 11,
wherein the electronic device (1) is a viewing device and the detection unit (2) is activated after the end of the actual programme or after a change of content.

13. Method for providing a switch off-function for an electronic device (1) comprising the steps of
detecting activity of a user by a detection unit (2) and
switching off the electronic device (1) in case that no user activity has been detected.

14. Method according to claim 13,
comprising the steps of enabling the user to input data and/or information via an input means (3) and depending on the information submitted by the input means (3) deciding upon the presence of user activity.

15. Method according to claim 13 or 14,
comprising the steps of detecting motion and/or speech of a user by a sensor (4) and depending on the information submitted by the sensor (4) deciding upon the presence of user activity.

16. Method according to any of claims 13 to 15,
comprising the step of repeating deciding upon detection of user activity several times before switching off the electronic device (1).

17. Method according to claim 16,
comprising the step of repeating deciding upon detection of user activity after predefined time intervals.

18. Method according to any of claims 13 to 15,
comprising the step of switching the electronic device (1) off after a predefined time interval and upon detection of user activity newly setting the switch off time.

19. Method according to any of claims 13 to 18,
comprising the step of outputting data and/or information to a user via an output means (6).

20. Method according to claim 19,
comprising the step of outputting via the output means (6) a test message requesting a user activity.

21. Method according to claim 19 or 20,
comprising the step of outputting via the output means (6) an indication for indicating the upcoming switch off of the electronic device (1).

22. Method according to claim 21,
comprising the step of changing the sensitivity of the detection unit (2) after the output of an indication message.

23. Method according to any of claims 13 to 22
comprising the step of activating the detection unit (2) only at a predefined time and/or date.

24. Method according to any of claims 13 to 23,
comprising the step of activating the detection unit (2) after the end of the actual programme or after a change of content.

25. Electronic device (1) with switch-off function comprising
a controller (5) for evaluating information related to a processed content and for switching the electronic device (1) off in case that depending on the evaluated information a change or end of the processed content is detected.

26. Electronic device (1) according to claim 25,
further comprising a reception unit (12) for receiving television broadcast, teletext data and an electronic programme guide EPG.

27. Electronic device (1) according to claim 26,
wherein the electronic device (1) is a viewing device and the content is a television programme.

28. Electronic device (1) according to claim 27,
wherein the controller (5) is adapted to detect a change or end of the television programme by evaluating the received electronic programme guide EPG.

29. Method for providing a switch-off function for an electronic device (1) comprising the steps of evaluating information related to a processed content and
switching the electronic device (1) off in case that depending on the evaluated information a change or end of the processed content is detected.

30. Method according to claim 29,
further comprising the step of receiving television broadcast, teletext data and an electronic programme guide EPG.

31. Method according to claim 30,
comprising the step of providing as electronic device (1) a viewing device and providing as content a television programme.

32. Method according to claim 31,
comprising the step of detecting a change or end of the television programme by evaluating the received electronic programme guide EPG.

33. Network comprising an electronic device (1) according to any of claims 1 to 12 or 25 to 28.

34. Network according to claim 33
comprising at least one further device (10a, 10b, 10c),
wherein the controller (5) of the electronic device is adapted to additionally switch off the at least one further device (10a, 10b, 10c) in case that the controller (5) switches off the electronic device (1).
